(19) Europäisches Patentamt
European Patent Office
Office européen des brevets

(11) EP 2 866 156 B1

(12) EUROPEAN PATENT SPECIFICATION

(45) Date of publication and mention
of the grant of the patent:
**02.09.2015  Bulletin 2015/36**

(51) Int Cl.:
**G06F 17/30** (2006.01)

(21) Application number: **13190332.0**

(22) Date of filing: **25.10.2013**

(54) **Method and apparatus for identity verification**

Verfahren und Vorrichtung zur Identitätsüberprüfung

Procédé et appareil de vérification d'identité

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.04.2015  Bulletin 2015/18**

(73) Proprietor: **GB Group PLC
Chester Cheshire CH4 9GB (GB)**

(72) Inventors:
• **Lally, Ian
Flint, CH6 5TL (GB)**
• **Spilsbury, Peter
Warrington, WA5 3FW (GB)**

(74) Representative: **Benson, Christopher et al
HGF Limited
4th Floor, Merchant Exchange
17-19 Whitworth Street West
Manchester M1 5WG (GB)**

(56) References cited:
**US-A1- 2009 106 242    US-A1- 2009 319 515
US-A1- 2011 317 926**

• DAVID NADEAU ET AL: "A survey of named entity recognition and classification", INTERNET CITATION, 1 January 2007 (2007-01-01), pages 1-20, XP002556251, Retrieved from the Internet: URL:http://nlp.cs.nyu.edu/sekine/papers/li 07.pdf [retrieved on 2009-11-09]

**Description**

Background

Embodiments of the invention provide a method and apparatus for verifying an identity of an entity. It is often desired to verify that an entity, such as a person, is valid. For example that a person is who they are purporting to be. One way of accomplishing this is to verify subject attribute information about the entity, such as name and address data, against one or more data sources. The one or more data sources may include official data sources such as an electoral register. If subject attribute data matches that associated with a candidate record stored in the one or more data sources, then the identity of the subject, such as the person, may be assumed to be verified.

However a problem may arise where the candidate attribute data associated with the candidate record is not an exact match for the subject attribute data for the entity. In this case, despite the subject attribute data for the entity being valid, the identity of the person may not be verified due to the inconsistency. This may result in a user being forced to perform multiple attempts to verify the identity of the person where each attempt requires data to be communicated and searches to be performed on the one or more data sources, which is time consuming.

Embodiments of the invention aim to provide an improved method and apparatus for verifying an identity of an entity even in the presence of inconsistent data.

It is an object of embodiments of the invention to at least mitigate one or more of the problems of the prior art.

US 2009/0319515 discloses a system and method for managing entity knowledgebases. The method builds an entity knowledgebase which consolidates multiple references to the same entity.

Brief Description of the Drawings

Embodiments of the invention will now be described by way of example only, with reference to the accompanying figures, in which:

Figure 1 shows an illustration of a system according to an embodiment of the invention;

Figure 2 shows a method according to an embodiment of the invention;

Figure 3 shows a method according to an embodiment of the invention;

Figure 4 shows a method according to an embodiment of the invention;

Figure 5 shows a subject record and a candidate record.

Detailed Description of Embodiments of the Invention

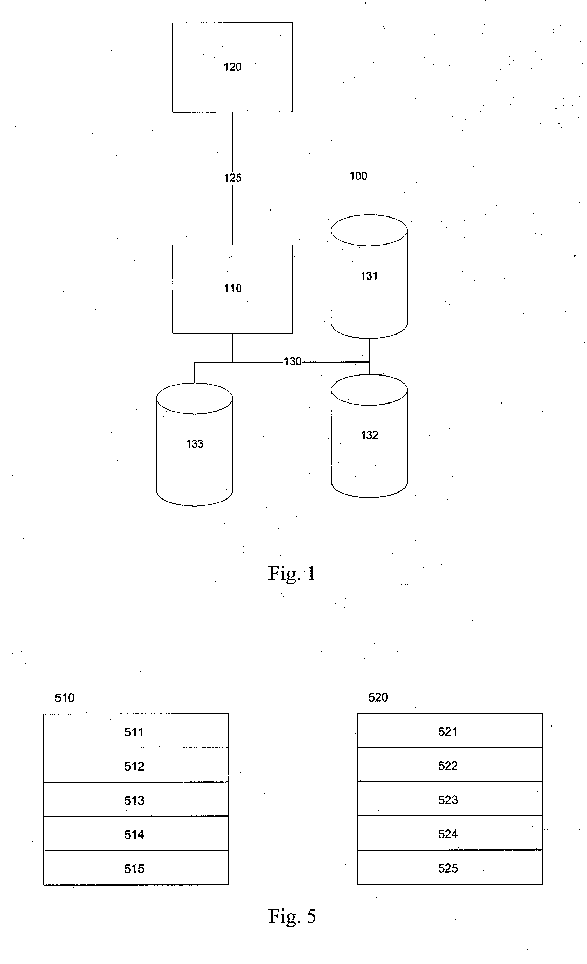

Figure 1 illustrates an identity verification system 100 according to an embodiment of the invention. The identity verification system 100 is for verifying the identity of an entity. The entity may be a person, group of persons or legal entity, such as company, a vehicle etc., although it will be realised that embodiments of the invention are not restricted by the nature or type of the entity.

The identity verification system 100 comprises an identity verification server 110 which is communicably coupled via a communications network 130 in use to one or more data sources 131, 132, 133. Although not necessarily forming part of the identity verification system 100, the verification server 110 is connected to a communications network 125 to communicate with a client device 120. The communications networks 125, 130 may each comprise one or more communications networks and may be, for example, the Internet.

The client device 120 is operable by a user and may be located remotely from the verification server 110. The user may be a person wishing to verify the identity of an entity, such as another person. For example, the user may be attempting to verify the identity of the person to allow a credit line to be extended, such as for the provision of an ongoing service or the sale of goods.

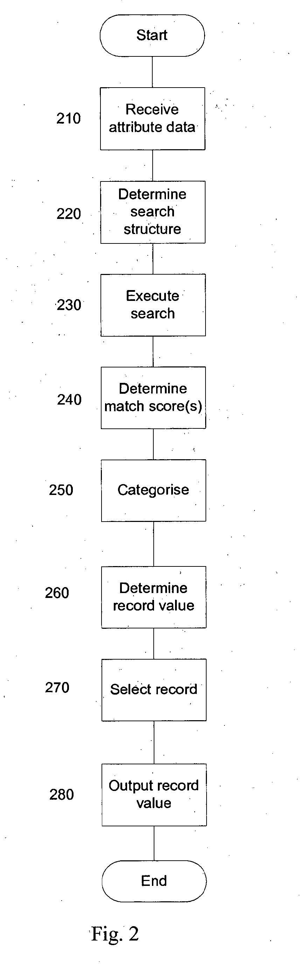

Operation of the system 100 shown in Figure 1 will now be described with reference to a method 200 according to an embodiment of the invention which is illustrated in Figure 2.

The user at the client device 120 may receive information about the person in the form of a plurality of items of subject attribute data, such as a supposed name of the person, address information comprising multiple items of subject attribute data, which may include a street name and building number. For example, the subject attribute data may be:

*Forename:* George
*Surname:* Cräne Smith
*Date of birth:* 01/02/1980
*Address line 1:* 10 Sallerupsvägen
*Zip:* 12344
*City:* Malmö
*Country:* Sweden

The subject attribute data may be entered into the client device 120 by the user and communicated to the verification server 110 via the communication network 125. For example, the client device 120 may access a form provided by the verification server 110, such as a HTML form accessed by a browser on the client device 120. In another embodiment a software application may execute on the client device 120 which is arranged to receive the data entered by the user into the client device 120 and to communicate that data to the verification server 110. The identity verification server 110 is arranged in step 210 to receive the subject attribute data from the client device 120.

The verification server 110 is arranged, in step 230, to execute a search against the one or more data sources 131, 132, 133 for at least some of the items of subject attribute data. The verification server 110 may select one or more items of subject attribute data from that received from the client device 120. For example, the verification server 110 may select subject attribute data corresponding to an entity forename i.e. "*Cräne Smith*" for the search. As can be appreciated, the example subject attribute data includes a special character in this example having an umlaut. The data stored in the one or more data sources 131, 132, 133 may have been incorrectly entered, have become corrupted, or have been entered in a different manner or format than that provided from the client device 120, especially in the case of special characters or where multiple spellings are in use such as "Craene Smith" where "ae" is the English equivalent to "*ä*". Therefore searching only for the subject attribute data received from the client device 120 against the data sources 131, 132, 133 may return limited or no search results.

Embodiments of the invention comprise a step 220, which is executed prior to step 230, in which a search structure is generated by the verification server 110. The search structure is generated based on the attribute data received in step 210. The search structure comprises a plurality of alternative search queries which are each based on the received subject attribute data. The search structure is generated to increase a likelihood of returning search results including results relating to the entity whose identity is attempting to be verified.

Step 220 may comprise selecting a subset of the received subject attribute data for each search query. The attribute data may be selected for each search query according to one or more predetermined rules. For example a first search query may be based on the 'surname' and 'date of birth' subject attribute data. In this way subject attribute data fields are selected to form the basis of the plurality of alternative search queries.

Embodiments of step 220 may comprise modifying the received subject attribute data to form at least some of the search queries so as to return inexact matches for the subject attribute data from the one or more data sources 131, 132, 133. In one embodiment the modification comprises inserting wildcard tokens around the subject attribute data. The wildcard token may comprise a % which allows matching of one or more characters in the data source 131, 132, 133 records. Embodiments may further comprise identifying one or more special characters in the subject attribute data and substituting those special characters with wildcard tokens, for example a %. Embodiments may further replace one or more predetermined characters or character combinations with wildcards. For example, the character combination "ae" may be replaced with a wildcard token.

Therefore, as a result of step 220, a first search query of the search structure may be generated based on the surname and date of birth subject attribute data *"Cräne Smith"* as "surname like %cr%n% and DOB= 1/2/1980". A second search query of the search structure may be generated as "building = 10 and street like s%11%r and zip = 12344". It will be noted that the search query based on the subject attribute data for street 's%11%r' has been truncated so as to be based on a predetermined number of characters at a start of the subject attribute data field. The predetermined number of characters may be a first six characters, although it will be realised that other numbers of characters may be chosen. Characters within the predetermined number of characters may be replaced with one or more wildcard characters, as described above:

Thus, in an embodiment of the invention, an exemplary search structure comprising a plurality of alternative search queries is:

*(surname like %cr%n% and dob = 1/2/1980) OR*
*(zip = 12344 and building = 10 and surname like %cr%n%) OR*
*(zip = 12344 and building = 10 and street like s%ll%r)*

The search structure aims to return search results from the one or more data source 131, 132, 133 which include one or more candidate records relevant to the subject entity.

In step 230 the verification server 110 executes the search of the one or more data sources 131, 132, 133 for the search structure generated in step 220. The search structure may be communicated from the verification server 110 to the one or more data sources 131, 132, 133 to search each data source for relevant candidate records which match one or more search queries of the search structure. It will be realised that multiple identical records may be returned based on the search structure. For example the first search query may return, amongst others, a candidate record which is also returned by searching the second search query. Similarly, the same candidate record may be returned by a search of two data sources such as data source 131 and data source 133. Embodiments of step 230 may comprise removing duplicate candidate records from the search results. Each candidate record comprises a plurality of data fields containing candidate attribute information relating to a candidate entity. For example, the data fields may comprise Forename, Surname, Street etc.

In step 240 a match score is determined for one or more fields of the candidate records returned in step 230. The match score is indicative of a match confidence between the subject attribute data received in step 210 and candidate attribute data stored associated with a corresponding field of each record returned in step 230. By match confidence it is understood that the match score is indicative of a degree of matching between the attribute data of the corresponding fields of each record.

As a result of step 240 a plurality of match scores are determined for each of a plurality of fields of the candidate returned records.

In step 250 a category is determined for each of the fields of the candidate records based on the score associated with each field in step 240.

In step 260 a best candidate record is selected based on the categories of the fields determined in step 250.

In step 270 a record value is determined which indicates a degree of match between the attribute data provided in step 210 and the record according to predetermined precedence criteria.

Further details of steps 250-270 will be provided below.

Figure 5 illustrates a subject record 510 and a candidate record 520. The subject record 510 is formed from the plurality of items of subject attribute data 511, 5112, 513, 514, 515 received in step 210 i.e. the subject record 510 is representative of the entity being verified. The candidate record 520 is returned in step 230 from one of the data sources 131, 132, 133 and comprises a plurality of items of candidate attribute data 521, 522, 523, 524, 525.

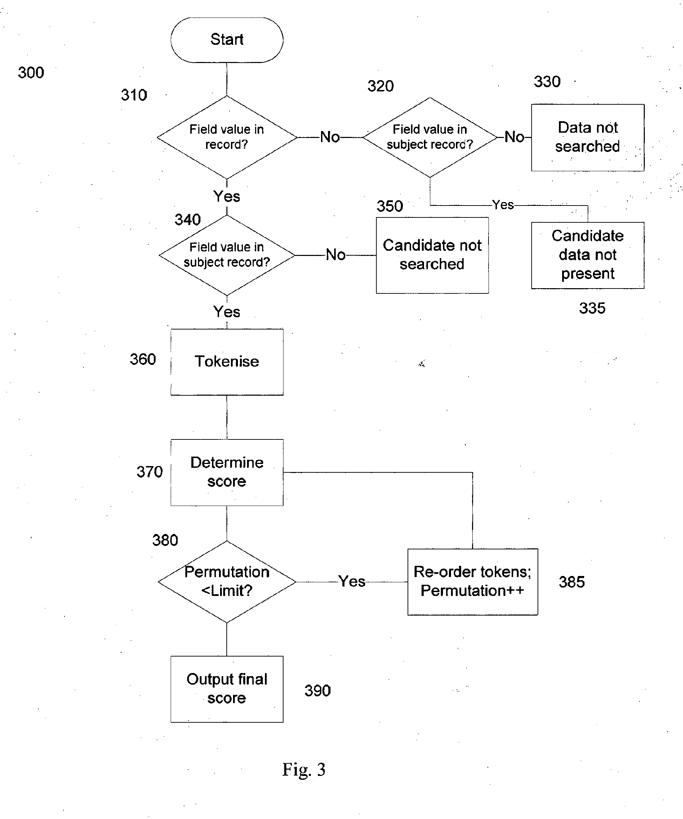

Figure 3 illustrates a method 300 of determining the match score for field of the candidate attribute data 521, 522, 523, 524, 525 of the candidate record 520. The method 300 may be performed in 240 step. The match score is determined based on a corresponding field of subject attribute data 511, 5112, 513, 514, 515. The following description will be based upon one item of subject and attribute data, such as fields 511 and 521. However it will be realised that the method 300 may be repeated for a plurality of items of subject and attribute data.

The method 300 comprises a step 310 of determining whether the selected candidate attribute data 521 in the candidate record 520 contains a value. That is, whether the selected attribute data 521 in the candidate record 520 stores a value. If the value of the candidate attribute data 521 is empty or null, then the method moves to step 320. In step 320 it is determined whether the subject attribute data 511 of the subject record 510 contains a value. If the subject attribute data 511 does not contain a value then the method moves to step 330 where the method 300 outputs an indication of the attribute data not being searched. The selected attribute data is not searched when both the subject attribute data 511 and the candidate attribute data 521 are empty or null. If the subject attribute data 511 contains a value then in step 338 an indication of the candidate data 521 being empty is output.

In step 340 it is determined whether subject attribute data 511 is empty or null. If the subject attribute data 511 does not contain a value, the method moves to step 350 where the method 300 outputs an indication of the candidate attribute data 521 containing a value, but the corresponding subject attribute data 511 not containing a value.

In step 360 a tokenisation process is performed. In the tokenisation process the subject attribute data 511 and candidate attribute data 521 are divided into one or more tokens. The subject attribute data 511 and candidate attribute data 521 are divided into tokens at one or more predetermined characters such as a space character, although it will be realised that other characters may also be used for the token division. In some embodiments the subject attribute data 511 and candidate attribute data 521 may also be divided into tokens at numerical values.

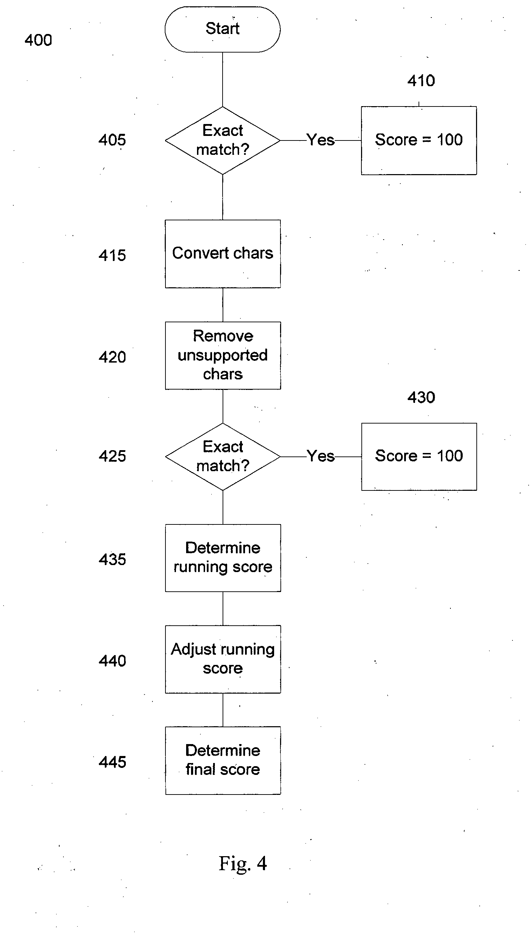

In step 370 a score for the attribute data match is determined. A method of determining the score will be described with reference to Figure 4. The score may be determined for each of a plurality of token permutations in order to determine a highest score, as will be explained. The score is determined in step 370 for one permutation of the tokens determined in step 360. In step 385 the tokens are reordered, providing a current reordering number is less than a predetermined limit in step 380, before a new score is determined in step 370, as will be explained.

In step 380 it is determined whether a current number of token permutations considered is less than a predetermined limit. The limit of token permutations defines a limit to the number of times tokens may be re-ordered to find a match between the subject attribute data and candidate attribute data. For example, in the case of the string being Sarah Jane and the record field being Jane Sarah, there would not be a match unless the token permutation limit was set to 1, thereby allowing the two tokens to be reordered at least once.

If the number of permutations considered is less than the limit, then method moves to step 385 where the tokens are re-ordered and the current number of permutations is incremented by 1.

In step 390 a highest score from those determined in step 370 is selected and output in step 390.

In step 390 a best score from those determined in step 380 for each of the plurality of token permutations is selected. The best score may be selected as the highest score i.e. based on a permutation of tokens which best match the subject attribute data and candidate attribute data. The best score corresponds to the match score for the subject attribute data 511 and candidate attribute data 521 determined in step 240.

Figure 4 illustrates a method 400 of determining a matching score, as in step 370 of Figure 3. The matching score is indicative of a match between a current permutation of tokens in the subject attribute data 511 and the candidate attribute data 521.

In step 405 it is determined whether the subject attribute data 511 exactly matches the candidate attribute data 521. If there is an exact match then the method moves to step 410 where a score value is set to a predetermined value indicative of the exact match, such as 100. However if the candidate attribute data 521 is not an exact match to the subject attribute data 511 the method moves to step 415.

In step 415 one or more predetermined characters, if present, may be converted to other associated characters in one or both of the subject attribute data 511 and the candidate attribute data 521. For example, as noted above a character "ä" may be converted to "ae" as the English equivalent. Step 415 may comprise accessing a character conversion list which identifies characters to be converted and replacement characters.

In step 420 any unsupported characters may be removed. The unsupported characters may be spaces, tabs or other formatting characters.

In step 425 it is determined whether the subject attribute data 511 matches the candidate attribute data 521 as modified by steps 415, 420. If there is an exact match then the method moves to step 430 where a score value is set to a predetermined maximum value indicative of the exact match, such as 100. However if the subject attribute data 511 and candidate attribute data 521 are not an exact match the method moves to step 435.

Step 435 comprises recursively calculating a score value each time a leading character of the subject and candidate attribute data 511, 521 is removed. A running score value is initially (in a first iteration) set to 0. The running score may be set to a predetermined maximum value such as 100 if the first characters of the subject and candidate attribute data 511, 521 match.

In a first iteration, a current depth of the subject and candidate attribute data 511, 521 is 1 i.e. the first character of each string is considered.

The running score is indicative of a match between the strings of subject and candidate attribute data 511, 521 from the current depth in each string according to one or more predetermined matching rules and values. The matching rules allow for respective types of mismatch between the subject and candidate attribute data strings and assign a respective value to the running score.

The matching rules may include one or more of:

- Double characters; double characters can be an obvious sign of a spelling mistake and can be weighted accordingly.
- Transposed characters; when a character is in the wrong position. E.g. if the subject name is "Bret" and candidate name is "Bert" it may be desired to score higher than for "Brit".
- Vowel error; errors in vowels is surprisingly common in some countries. This logic allows weighing for mistakes such as "Isobella" instead of "Isabella".
- Left padding of zeros; zero left padding may be useful for zip code matching.
- A value to score incorrect characters.
- A value to score a missing character within a string.
- A value to score missing character at the end of a string. This may be allocated a relatively low score to account for street abbreviations
- Value used to score numeric mismatches heavily. This is useful for fields like building and postcode where numeric values should be exact.

Each matching rule is associated with a respective score value upon which the running score is determined. In an embodiment of the invention each attribute data field is associated with a respective score value for each matching rule. That is, the matching rule for double characters may be associated with a different score value for each of the attribute data fields of the subject and candidate records 510, 520. For example, for a forename attribute data field the missing characters within a string matching rule may be associated with a score value of 0, whereas for the street attribute data field the missing characters within a string matching rule may be associated with a value of 20. In this way, missing characters within the forename attribute data field are penalised more (given a lower running score value) than for the street attribute data field. A higher score indicates a better match.

In step 370 the matching rules are applied in a plurality of combinations to determine a highest matching score between the subject and candidate attribute data strings. By combinations it is meant that different combinations of matching rules are selected and applied to the strings whilst the highest determined score is tracked. In this way, the best score value between the subject and candidate attribute data strings based on at least some of the matching rules is determined according to the score values for that respective attribute data field.

By way of an example, the score values associated with the attribute data field for 'street' may be:

- Incorrect chars = 0
- Missing end chars = 70
- Vowel errors = 75
- Double chars = 75
- Missing middle chars = 20
- Transposed chars = 75
- Left padding weight = 100

Table 1 below lists a string of the subject and candidate attribute data field 'street'. During a first iteration, at depth 1, the characters B and A of the subject and candidate strings are compared and not found to be a match i.e. a score of 0 is determined. Similarly, at depth 2 the characters C and B are compared and not found to be a match. The running score determines a cumulative total of the score for each comparison.

At depth 5 the subject string does not contain any value or character. According to the matching rules, above, a missing end character is allocated a score of 70 which for each of the last three candidate string characters provides a total running score of 210.

Table 1

| Subject string | Candidate string | Depth | Score | Current Running Score |
|---|---|---|---|---|
| B | A | 1 | 0 | 0 |
| C | B | 2 | 0 | 0 |
| E | C | 3 | 0 | 0 |
| F | D | 4 | 0 | 0 |
| | E | 5 | 70 - missing end char | 70 |
| | F | 6 | 70 - missing end char | 140 |
| | G | 7 | 70 - missing end char | 210 |

The running score may be scaled proportional to the total number of string characters in the longest of the subject and candidate strings as:

$$Running\ score = \frac{running\ score}{current\ depth}$$

Thus for the above example a best running score for all combinations of the matching rules may be determined as 210/7=30.

Table 2 provides a further example.

Table 2

| Subject string | Candidate string | Depth | Score | Current Running Score |
|---|---|---|---|---|
| A | A | 1 | 100 | 100 |
| B | B | 2 | 100 | 200 |
| D | C | 3 | 20 - missing mid char | 220 |
| E | D | 4 | 100 | 320 |
| F | E | 5 | 100 | 420 |

(continued)

| Subject string | Candidate string | Depth | Score | Current Running Score |
|---|---|---|---|---|
| | F | 6 | 100 | 520 |
| | G | 7 | 70 | 590 |

During a first iteration, at depth 1, the characters A and A of the subject and candidate strings are compared and found to be a match i.e. a score of 100 is determined, which is added to the running score. At depth 3 the characters D and C are compared, which are not a match. However the missing character match rule is associated with a value of 20. This effectively allows a comparison of character D at depth 3 in the subject string and character D at depth 4 in the candidate string i.e. allowing for the missing character in the candidate string to thereby allocate a score of 20 at depth 3. This offset is then continued for further character comparisons so that the score at depth 4 is 100 owing to a match between character E at depth 4 in the subject string and character 5 at depth 5 in the candidate string. At depth 7, since there is no character in the subject string at depth 6, the missing end character value of 70 is determined. A final running score value of 590/7=84.2 is determined. In this way, a better match between the second example subject and candidate attribute data fields is determined than for the first, as indicated by the respective final running scores of 30 and 84.

In step 440 the running score may be adjusted as:

- If running score < 0, score = 0
- Else if running score > 100, score = 100
- Else running score = running score + weight

The weight is a value which may be added to the running score based on one or more criteria. The weight may be selected from one of a number of weights. The weight value may be added according to the candidate comprising one or more of:

- Double characters;
- Missing character at the end of a string.
- Vowel error;
- Transposed characters;
- Left padding of zeros;
- A value to score incorrect characters.
- A value to score a missing character within a string.

Each criteria may be associated with a respective weight value, wherein the criteria resulting in a greatest running score is used to adjust the running score.

As a result, the running score determined by step 440 is between 0 and 100 indicative of the match between subject and candidate attribute data.

Step 445 comprises determining a final score value. The final score is based on the previously determined running score ($a$). The final score is further based upon a number tokens matched between the subject attribute data and candidate attribute data. A number of tokens in the subject attribute data matching tokens in the candidate attribute data is denoted $b$ and a number of tokens in the subject attribute data which do not match is denoted c. A number of tokens in the candidate attribute data which do not match tokens in the subject attribute data is denoted d. The determination of whether a token in the attribute data matches a corresponding token in the other attribute data may be determined with respect to a predetermined threshold i.e. a predetermined percentage of characters between the tokens. In other words, it is not necessary to have a 100% correspondence between the tokens to be regarded as a match. A total number of tokens which do not match is denoted as e and can be calculated as $e=c+d$.

The final score z may be calculated as:

$$if\,(b+e=0),f=0$$

$$else\ f=\frac{100}{b+e}$$

$$g = f \times c$$

$$h = f \times d$$

$$i = 100 - D_S$$

$$j = 100 - D_C$$

Where $D_S$ is a predetermined value which is used to weight tokens in the subject attribute data which do not match and $D_C$ is used to weight tokens in the candidate attribute data which do not match. In one embodiment both $D_S$ and $D_C$ are 75, although it will be realised that this is merely exemplary.

$$k = 100 - \left[\frac{i}{100} \times g\right]$$

$$l = 100 - \left[\frac{j}{100} \times h\right]$$

If $b = 0$, $z = 0$ (If no subject tokens match then final score is 0)
Else

$$x = \frac{a}{b}$$

Thus the running score value a is scaled by the number of matched subject attribute data tokens.

$$y = \frac{k}{100} \times x$$

$$z = \frac{l}{100} \times y$$

wherein z is the final score value
The final score calculation will now be explained with reference to an example, as follows:

Subject attribute data: Isabella Ellen
Candidate attribute data: Isabella
$D_S = 90$, $D_C = 75$.

The running score $a = 100$
The number of matched subject tokens (Isabella) $b = 1$;
The number not matched subject token (Ellen) $c = 1$,
The number of not matching candidate tokens $d = 0$; and
The number of not matching tokens ($c+d$) $e = 1$.

Therefore:

$f$ = 100/$b$+$e$ = 100/2=50.
$g$ = 50 * 1=50;
$h$ = 50 * 0=0;
$i$ = 100 - 90;
$j$ = 100 - 75;
$k$ = 100 - ((10 / 100.00) * 50)
$l$ = 100 - ((25 / 100.00) * 0)
$x$ = 100/1
$y$ = (95 / 100) * 100
$z$ = (100 / 100) * 95 = 95

The candidate attribute data "Isabella" is determined to have a final score of 95 compared to the subject attribute data "Isabella Ellen". In this way a final score is determined for every item of candidate attribute data considered for one or more candidate records.

Returning again to Figure 2, in step 250, a category is determined for each candidate attribute field of each candidate attribute record 521. The category is indicative of a match of the candidate attribute field to the corresponding field of the subject data record. The category is determined based on the match score from step 240. The match score value is compared against a plurality of thresholds to select one of a plurality of categories for the candidate attribute data field. The categories indicate a level of matching between the subject and candidate attribute data. In one embodiment, categories of full match, partial match and mismatch are used, although it will be realised that these are exemplary. Each category is associated with a threshold value. For example, the "full match" category may be associated with a minimum score value of 100. The "partial match" category may be associated with minimum threshold of 95, and the "mismatch" category with a threshold value of 94 i.e. mismatch is a value of 0-94. The final match score is compared against the threshold values to determine a category of the attribute data match.. The example above may be determined to be a partial match based on its associated score of 95. A category is determined for each of a plurality of attribute data fields of the plurality of candidate records provided by the search undertaken in step 230.

In step 260 a record value is determined for each candidate record. The record value for the candidate record is determined based on a plurality of precedence rules and the associated category of each data field of the candidate record. The precedence rules associate the category of each candidate attribute data field, as discussed above, with a respective portion of a record value. The record value is used to select the best candidate record. The precedence rules weight the record value according to candidate attribute data fields deemed to be most important. For example, an address field may be assigned a greatest weight and thus that the accuracy of the attribute data field has the greatest effect on the selection of the best candidate record. A second most important attribute data field may be, for example, surname which is consequently allocated a second greatest weight. The weight may be indicated by the significance of the portion of the record value. For example the portion of the record value based on the address field may be a most significant portion, with the surname portion of the record value a next-most significant portion, as will be explained.

Example attribute data fields and associated record values are provided below, although it will be realised that other orders of precedence and record values may be chosen. From the examples below, it can be appreciated that for an attribute data field, such as address, a contribution to the total record value of the candidate record is chosen based on the category selected as described above. For example, for an address attribute data field which is a full match between subject record and candidate record, the record value is incremented, from an initial zero value, by 400000000. Thus, in this example, a most significant digit is indicate of the match of the address field between subject and candidate records 511, 521. Similarly, a next most significant digital of the record value is indicative of a match of the surname data fields. If the next most significant digit is 3 this is indicative of a partial match between surname data fields of the subject and candidate records 511, 521.

|  |  |
|---|---|
| *Address* | |
| Full match | + 400000000 |
| Incomplete match | + 300000000 |
| Mismatch | + 200000000 |
| Unknown / Not supplied | + 100000000 |
| *Surname* | |
| Full match | + 40000000 |
| Partial match | + 30000000 |
| Mismatch | + 20000000 |

(continued)

| | |
|---|---|
| *Surname* | |
| Unknown / Not supplied | + 10000000 |
| *Forename* | |
| Full match | + 6000000 |
| Partial match | + 5000000 |
| Alias match | + 4000000 |
| Partial alias match | + 3000000 |
| Mismatch | + 2000000 |
| Unknown / Not supplied | + 1000000 |
| *DOB* | |
| Full match | + 400000 |
| Partial match | + 300000 |
| Mismatch | + 200000 |
| Unknown / Not supplied | + 100000 |
| *Building* | |
| Full match | + 40000 |
| Partial match | + 30000 |
| Mismatch | + 20000 |
| Unknown / Not supplied | + 10000 |
| *Street* | |
| Full match | + 4000 |
| Partial match | + 3000 |
| Mismatch | + 2000 |
| Unknown / Not supplied | + 1000 |
| *ZIP* | |
| Full match | + 400 |
| Partial match | + 300 |
| Mismatch | + 200 |
| Unknown / Not supplied | + 100 |
| *City* | |
| Full match | + 40 |
| Partial match | + 30 |
| Mismatch | + 20 |
| Unknown / Not supplied | + 10 |
| *Gender* | |
| Full match | + 4 |
| Mismatch | + 2 |
| Unknown / Not supplied | + 1 |

Thus, in the example above, the record value for each candidate record comprises 9 portions wherein each portion is indicative of match category of the subject record with the respective candidate record. It will be realised that the record value may be composed of another number of portions. The record value accounts for the attribute data fields which are deemed to be most important, such as address, which are given a large weighting, compared against those deemed to be less important, such as gender, which are given a smaller value.

In step 270 a best matching candidate record is selected. The best matching candidate record is selected based upon the record value associated with each candidate record. The best candidate record may be selected as that having a greatest record value.

In step 280 the record value of the best matching candidate record is communicated to the client device 120 via the communications network 125. The record value may then be used at the client device to determine whether the subject attribute data is valid, based on respective portions of the record value.

Embodiments of the invention provide a method and apparatus for verifying the identity of an apparatus which advantageously allows the identity to be determined and communicated to a client device in an improved manner. In particular, the identity of the entity may be verified even in the presence of errors in one or more data sources. Furthermore information indicative of the verification process is communicated in an efficient manner to the client device so as to allow the client device to determine portions of identity information which have been verified.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

**Claims**

1. A computer-implemented method (200, 300, 400) of verifying an identity of an entity against one or more data sources (131, 132, 133), comprising:

   receiving, at a verification server (110) from a client device (120), a plurality of items of subject attribute data (511, 512, 513) associated with an entity;
   determining (220) a search structure based on the plurality of items of subject attribute data, the search structure comprising a plurality of alternate search queries, wherein determining the search structure comprises selecting at least some of the items of subject attribute data for each search query and modifying at least some of the items of subject attribute data to return candidate records comprising candidate attribute data which is an inexact match for the subject attribute data;
   searching (230) the one or more data sources (131, 132, 133) for the search structure to return one or more candidate records (520) from the one or more data sources, each record comprising a plurality of items of candidate attribute data (521 ,522, 523);
   determining a score indicative of a match confidence between each of the plurality items of subject attribute data (511, 512, 523) and a corresponding item of candidate attribute data (521, 522, 523) for each candidate record (520), wherein determining the score comprises:

      dividing (360) corresponding items of subject attribute data (511, 512, 513) and candidate attribute data (521, 522, 523) into a plurality of tokens;
      for each of a plurality of token permutations (385) of the subject attribute data and the candidate attribute data, determining a value (370, 400) indicative of a match between the composition of the subject and candidate attribute data and a length of the subject and candidate attribute data;
      determining (435, 440, 445) the score based on the value and a number of tokens of the subject and candidate attribute data having at least a predetermined degree of similarity; and
      selecting (390) the highest score for one of the plurality of token permutations;

   determining (260) a record value for each candidate record, wherein the record value is determined based the score of each item of candidate attribute data associated with the record, a plurality of score thresholds and precedence rules indicative of a weight of each item of candidate attribute data;
selecting (270) a candidate record having a greatest record value; and
outputting (280) the record value of the selected candidate record from the verification server (110) to the client device (120).

2. The method of claim 1, wherein the determining (370, 400) the value indicative of the match between the composition of the subject and candidate attribute data comprises:

selecting plurality of matching rules each respectively allowing a predetermined mismatch between the composition of the subject and candidate attribute data, wherein each matching rule is associated with a predetermined mismatch value, wherein the value indicative of the match between the composition of the subject and candidate attribute data is based on the plurality of matching rules returning a greatest value.

3. The method of claim 2, wherein the matching rules comprise at least some of:

one or more missing characters from the respective attribute data;
one or more missing end characters from the respective attribute data;
a vowel error;
a transposed character error; and
a repeated character error.

4. The method of claim 2 or 3, wherein each attribute field is associated with a respective set of matching rules each having a respective mismatch value.

5. The method of any preceding claim, wherein the record value for each candidate record comprises a plurality of portions each associated with a respective item of attribute data and the precedence rules define a plurality of possible values for the respective portion indicative of the with respect to the plurality of score thresholds.

6. The method of any preceding claim, wherein the plurality of score threshold define a plurality of categories each indicative of a quality of match between the composition of the subject and candidate attribute data.

7. The method of any preceding claim, wherein the determining (435, 440, 445) the score comprises:

$$if\,(b+e=0),f=0$$

$$else\ f = \frac{100}{b+e}$$

wherein: the value (370, 400) indicative of the match between the composition of the subject and candidate attribute data is $a$; a number of tokens in the subject attribute data corresponding to tokens in the candidate attribute data is $b$; a number of tokens in the subject attribute data which do not match is $c$; a number of tokens in the candidate attribute data which do not match tokens in the subject attribute data is d; a total number of tokens which do not match is e; and

$$g = f \times c$$

$$h = f \times d$$

$$i = 100 - D_S$$

$$j = 100 - D_C$$

wherein $D_S$ is a predetermined value used to weight tokens in the subject attribute data which do not match and $D_C$ is a predetermined value used to weight tokens in the candidate attribute data which do not match;

$$k = 100 - \left\lfloor \frac{i}{100} \times g \right\rfloor$$

$$l = 100 - \left\lfloor \frac{j}{100} \times h \right\rfloor$$

*If b = 0, z = 0; Else*

$$x = \frac{a}{b}$$

$$y = \frac{k}{100} \times x$$

$$z = \frac{l}{100} \times y$$

wherein z is the score.

**8.** A computer system, comprising:

a client device; and
a verification server arranged to perform a method according to any preceding claim;
wherein the client device and the verification server are communicably coupled;
wherein the client device is arranged to communicate a plurality of items of subject attribute data (511, 512, 513) associated with an entity to the verification server, to receive a record value from the verification server in response thereto, and to output an indication of the verification subject attribute data based on the record value.

**9.** Computer software which, when executed by a computer, is arranged to perform a method according to any of claims 1 to 7.

**10.** The computer software of claim 9 stored on a computer-readable medium.

**11.** A verification server arranged to perform a method according to any of claims 1 to 7.

**Patentansprüche**

**1.** Computerimplementiertes Verfahren (200, 300, 400) zum Abgleichen einer Identität einer Einheit mit einer oder mehreren Datenquellen (131, 132, 133), umfassend:

Empfang, auf einem Verifizierungsserver (110) von einem Client-Gerät (120), einer Vielzahl von Elementen an Subjektattributdaten (511, 512, 513), die mit einer Einheit assoziiert werden;
Bestimmen (220) einer Suchstruktur basierend auf der Vielzahl von Elementen an Subjektattributdaten, wobei die Suchstruktur eine Vielzahl von alternierenden Suchanfragen umfasst, wobei das Bestimmen der Suchstruktur die Auswahl von zumindest einigen der Elemente an Subjektattributdaten für jede Suchanfrage und das Ändern von zumindest einigen der Elemente an Subjektattributdaten umfasst, um Kandidatenaufzeichnungen zurückzusenden, die Kandidatenattributdaten umfassen, die eine ungenaue Übereinstimmung mit den Subjektattributdaten sind;
Durchsuchen (230) der einen oder mehreren Datenquellen (131, 132, 133), damit die Suchstruktur eine oder mehrere Kandidatenaufzeichnungen (520) von der einen oder den mehreren Datenquellen zurücksendet, wobei jede Aufzeichnung eine Vielzahl von Elementen an Kandidatenattributdaten (521, 522, 523) umfasst; Bestimmen eines Ergebnisses, das ein Übereinstimmungsvertrauen zwischen jedem der Vielzahlelemente an Subjektattributdaten (511, 512, 523) und einem entsprechenden Element an Kandidatenattributdaten (521, 522, 523) für jede Kandidatenaufzeichnung (520) bezeichnet, wobei das Bestimmen des Ergebnisses Folgendes umfasst:

Teilen (360) entsprechender Elemente an Subjektattributdaten (511, 512, 513) und Kandidatenattributdaten (521, 522, 523) in eine Vielzahl von Token;

für jedes einer Vielzahl von Token-Permutationen (385) der Subjektattributdaten und der Kandidatenattributdaten Bestimmen eines Wertes (370, 400), der eine Übereinstimmung zwischen der Zusammensetzung der Subjekt- und Kandidatenattributdaten und einer Länge der Subjekt- und Kandidatenattributdaten bezeichnet;

Bestimmen (435, 440, 445) des Ergebnisses basierend auf dem Wert und einer Anzahl von Token der Subjekt- und Kandidatenattributdaten mit zumindest einem zuvor festgelegten Grad an Ähnlichkeit; und

Auswahl (390) des höchsten Ergebnisses für eine der Vielzahl von Token-Permutationen;

Bestimmen (260) eines Aufzeichnungswertes für jede Kandidatenaufzeichnung, wobei der Aufzeichnungswert basierend auf dem Ergebnis jedes Elements an Kandidatenattributdaten, die mit der Aufzeichnung assoziiert werden, einer Vielzahl von Ergebnisschwellen und Prioritätsregelungen, die eine Gewichtung jedes Elements an Kandidatenattributdaten bezeichnen, bestimmt wird;

Auswahl (270) einer Kandidatenaufzeichnung mit einem höchsten Aufzeichnungswert; und

Ausgabe (280) des Aufzeichnungswertes der ausgewählten Kandidatenaufzeichnung aus dem Verifikationsserver (110) in das Client-Gerät (120).

2. Verfahren nach Anspruch 1, wobei das Bestimmen (370, 400) des Wertes, der die Übereinstimmung zwischen der Zusammensetzung der Subjekt- und Kandidatenattributdaten bezeichnet, Folgendes umfasst:

Auswahl einer Vielzahl an Übereinstimmungsregeln, wobei jede jeweils eine zuvor festgelegte Diskrepanz zwischen der Zusammensetzung der Subjekt- und Kandidatenattributdaten erlaubt, wobei jede Übereinstimmungsregel mit einem zuvor festgelegten Diskrepanzwert assoziiert wird, wobei der Wert, der die Übereinstimmung zwischen der Zusammensetzung der Subjekt- und Kandidatenattributdaten bezeichnet, auf der Vielzahl von Übereinstimmungsregeln, die einen höchsten Wert zurücksenden, basiert.

3. Verfahren nach Anspruch 2, wobei die Übereinstimmungsregeln zumindest einiges des Folgenden umfassen:

ein oder mehrere fehlende Zeichen aus den jeweiligen Attributdaten;

ein oder mehrere fehlende Endzeichen aus den jeweiligen Attributdaten;

einen Vokalfehler;

einen Fehler einer Zeichenvertauschung; und

einen Fehler einer Zeichenwiederholung.

4. Verfahren nach Anspruch 2 oder 3, wobei jedes Attributfeld mit einem jeweiligen Satz an Übereinstimmungsregeln mit jeweils einem jeweiligen Diskrepanzwert assoziiert wird.

5. Verfahren nach einem vorhergehenden Anspruch, wobei der Aufzeichnungswert für jede Kandidatenaufzeichnung eine Vielzahl von Teilen umfasst, wovon jeder mit einem jeweiligen Element an Attributdaten assoziiert wird und die Prioritätsregelung eine Vielzahl von möglichen Werten für den jeweiligen Teil, der hinsichtlich der Vielzahl von Ergebnisschwellen bezeichnet, definiert.

6. Verfahren nach einem vorhergehenden Anspruch, wobei die Vielzahl an Ergebnisschwellen eine Vielzahl von Kategorien definiert, von denen jede eine Qualität einer Übereinstimmung zwischen der Zusammensetzung der Subjekt- und Kandidatenattributdaten bezeichnet.

7. Verfahren nach einem vorhergehenden Anspruch, wobei das Bestimmen (435, 440, 445) des Ergebnisses Folgendes umfasst:

$$falls \ (b+e=0), f=0$$

$$ansonsten \quad f = \frac{100}{b+e}$$

wobei: der Wert (370, 400), der die Übereinstimmung zwischen der Zusammensetzung der Subjekt- und Kandidatenattributdaten bezeichnet, $a$ ist; eine Anzahl an Token in den Subjektattributdaten, die Token in den Kandidatenattributdaten entspricht, $b$ ist; eine Anzahl an Token in den Subjektattributdaten, die nicht übereinstimmen, $c$ ist; eine Anzahl an Token in den Kandidatenattributdaten, die nicht mit Token in den Subjektattributdaten übereinstimmen, $d$ ist; eine Gesamtzahl an Token, die nicht übereinstimmen, $e$ ist; und

$$g = f \times c$$

$$h = f \times d$$

$$i = 100 - D_S$$

$$j = 100 - D_C$$

wobei $D_S$ ein zuvor festgelegter Wert ist, der verwendet wird, um Token in den Subjektattributdaten, die nicht übereinstimmen, zu gewichten und $D_C$ ein zuvor festgelegter Wert ist, der verwendet wird, um Token in den Kandidatenattributdaten, die nicht übereinstimmen, zu gewichten;

$$k = 100 - \left[\frac{i}{100} \times g\right]$$

$$l = 100 - \left[\frac{j}{100} \times h\right]$$

*Falls b = 0, z = 0; Ansonsten*

$$x = \frac{a}{b}$$

$$y = \frac{k}{100} \times x$$

$$z = \frac{l}{100} \times y$$

wobei z das Ergebnis ist.

8.  Computersystem, umfassend:

    ein Client-Gerät; und
    einen Verifikationsserver, der so angeordnet ist, dass er ein Verfahren nach einem vorhergehenden Anspruch durchführt;

wobei das Client-Gerät und der Verifikationsserver so miteinander verbunden sind, dass sie miteinander kommunizieren können;

wobei das Client-Gerät so angeordnet ist, dass es dem Verifikationsserver eine Vielzahl von Elementen an Subjektattributdaten (511, 512, 513), die mit einer Einheit assoziiert werden, mitteilt, um als Antwort darauf vom Verifikationsserver einen Aufzeichnungswert zu erhalten,

und um eine Bezeichnung der Verifikationssubjektattributdaten basierend auf dem Aufzeichnungswert auszugeben.

9. Computersoftware, die, wenn sie von einem Computer ausgeführt wird, so angeordnet ist, dass sie ein Verfahren nach einem der Ansprüche 1 bis 7 durchführt.

10. Computersoftware nach Anspruch 9, gespeichert auf einem computerlesbaren Medium.

11. Verifikationsserver, der so angeordnet ist, dass er ein Verfahren nach einem der Ansprüche 1 bis 7 durchführt.

**Revendications**

1. Une méthode mise en oeuvre par ordinateur (200, 300, 400) de contrôle d'une identité en fonction d'une ou de plusieurs sources de données (131, 132, 133), comprenant :

la réception, à un serveur de vérification (110) d'un dispositif client (120) d'une série d'éléments de données d'attributs du sujet (511, 512, 513) correspondant à une entité ;

la détermination (220) d'une structure de recherche basée sur la série d'éléments de données d'attributs du sujet, la structure de recherche comprenant une série de requêtes de recherche alternatives, la détermination de la structure de recherche comprenant la sélection d'au moins certains des éléments de données d'attributs du sujet pour chaque requête de recherche, et la modification d'au moins certains des éléments de données d'attribut du sujet pour fournir des dossiers de candidats comprenant des données d'attributs du candidat constituant une correspondance inexacte aux données d'attributs du sujet ;

la recherche (230) dans la ou les différentes sources de données (131, 132, 133) de la structure de recherche pour fournir un ou plusieurs dossiers de candidats (520) parmi la ou les différentes sources de données, chaque dossier comprenant une série d'éléments des données d'attributs du candidat (521, 522, 523) ;

la détermination d'un score indiquant une confiance de couplage entre chacun des éléments de pluralité d'éléments de données d'attributs du sujet (511, 512, 513) et un élément correspondant de données d'attributs du candidat (521, 522, 523) pour chaque dossier de candidats (520), la détermination du score comprenant :

la division (360) d'éléments correspondants de données d'attributs du sujet (511, 512, 513) et de données d'attributs du candidat (521, 522, 523) en une série de jetons ;

pour chacune des séries de permutations de jetons (385) des données d'attributs du sujet et de données d'attributs du candidat, la détermination d'une valeur (370, 400) indiquant une correspondance entre la composition du sujet et les données d'attributs du candidat, et une longueur des données d'attributs du sujet et du candidat ;

la détermination (435, 440, 445) des données de score basées sur la valeur et un nombre de jetons de données d'attribut du sujet et du candidat présentant au moins un degré prédéterminé de similitude ; et

la sélection (390) du score le plus élevé pour une de la série de permutations de jetons ;

la détermination (260) d'une valeur de dossier pour chaque dossier de candidat, la valeur de dossier étant déterminée sur la base du score de chaque élément des données d'attributs du candidat associées avec le dossier, une série de seuils de score, et des règles de précédence indiquant une pondération de chaque élément des données d'attribut du candidat ;

la sélection (270) d'un dossier de candidat présentant une valeur de dossier la plus élevée ; et

la transmission (280) de la valeur de dossier du dossier de candidat sélectionné du serveur de vérification (110) au dispositif du client (120).

2. La méthode selon la revendication 1, dans laquelle la détermination (370, 400) de la valeur indiquant une correspondance entre la composition du sujet et les données d'attributs du candidat comporte :

la sélection d'une série de règles de correspondance, chacune permettant respectivement une disparité prédéterminée entre la composition du sujet et les données d'attributs du candidat, à chaque règle de correspondance étant associée une valeur de disparité prédéterminée, la valeur indicatrice de la correspondance entre la composition du sujet et les données d'attribut du candidat étant basée sur la pluralité des règles de correspondance produisant la valeur la plus élevée.

3. La méthode selon la revendication 2, dans laquelle les règles de correspondance comprennent au minimum certaines des suivants :

un ou plusieurs caractères absents des données d'attribut correspondantes ;
un ou plusieurs caractères de fin absents des données d'attribut correspondantes ;
une erreur de voyelle ;
une erreur de caractère transposé ; et
une erreur de caractère répété.

4. La méthode selon la revendication 2 ou 3, dans laquelle à chaque champ d'attribut est associé un ensemble respectif de règles de correspondance, possédant chacun une valeur de disparité.

5. La méthode selon une quelconque des revendications précédentes, dans laquelle la valeur de dossier pour chaque dossier de candidat comprend une série de portions, à chacune desquelles étant associé un élément respectif de données d'attribut, et les règles de priorité définissent une série de valeurs possibles pour la partie respective indiquant le relativement à la série de seuils de scores.

6. La méthode selon une quelconque des revendications précédentes, dans laquelle la série de seuils de scores définit une série de catégories, chacune desquelles indiquant une qualité de correspondance entre la composition du sujet et les données d'attribut du candidat.

7. La méthode selon une quelconque des revendications précédentes, dans laquelle la détermination (435, 440, 445) du score comprend :

$$\text{Si :} \quad (b+e=0), f=0$$

$$\text{Soit :} \quad f = \frac{100}{b+e}$$

où la valeur (370, 400) indiquant la correspondance entre la composition du sujet et les données d'attribut du candidat est $a$ ; un nombre de jetons $a$ dans les données d'attributs du candidat, correspondant aux jetons dans les données d'attribut du candidat, est $b$ ; un nombre de jetons dans les données d'attributs du candidat ne correspondant pas est $c$ ; un nombre de jetons dans les données d'attributs du candidat ne correspondant pas à des jetons dans les données d'attribut du sujet est $d$ ; et un nombre total de jetons ne correspondant pas est $e$ ; et

$$g = f \, x \, c$$

$$h = f \, x \, d$$

$$i = 100 - D_s$$

$$j = 100 - D_c$$

où $D_s$ est une valeur prédéterminée que l'on utilise pour des jetons de pondération dans les données d'attribut du sujet sans correspondance, et $D_c$ est une valeur prédéterminée utilisée pour des jetons de pondération dans les données d'attribut du candidat ne correspondant pas ;

$$k = 100 - \left[\frac{i}{100} \times g\right]$$

$$l = 100 - \left[\frac{j}{100} \times h\right]$$

*Si b = 0, z = 0; soit*

$$x = \frac{a}{b}$$

$$y = \frac{k}{100} \times x$$

$$z = \frac{l}{100} \times y$$

Où z est le score.

8. Un système informatique comprenant :

un dispositif client ; et
un serveur de vérification configuré pour l'exécution d'une méthode selon une quelconque des revendications précédentes ;
le dispositif client et le serveur de vérification étant accouplés en communication ;
le dispositif client étant configuré de façon à communiquer une série d'éléments de données d'attribut du sujet (511, 512, 513) correspondant à une entité au serveur de vérification, pour recevoir, en réponse, du serveur de vérification une valeur de dossier, et pour transmettre une indication des données d'attribut du sujet de vérification d'après la valeur de dossier.

9. Un logiciel qui, lors de son application par un ordinateur, est disposé pour l'exécution d'une méthode selon une quelconque des revendications 1 à 7.

10. Le logiciel selon la revendication 9 placé sur un support lisible par ordinateur.

11. Un serveur de vérification configuré pour l'exécution d'une méthode selon une quelconque des revendications 1 à 7.

Fig. 1

Fig. 5

```
                    ┌──────────────┐
                    │    Start     │
                    └──────────────┘
                            │
                    ┌──────────────┐
      210           │   Receive    │
                    │ attribute data│
                    └──────────────┘
                            │
                    ┌──────────────┐
                    │  Determine   │
      220           │    search    │
                    │  structure   │
                    └──────────────┘
                            │
                    ┌──────────────┐
      230           │   Execute    │
                    │    search    │
                    └──────────────┘
                            │
                    ┌──────────────┐
                    │  Determine   │
      240           │ match score(s)│
                    └──────────────┘
                            │
                    ┌──────────────┐
      250           │  Categorise  │
                    └──────────────┘
                            │
                    ┌──────────────┐
                    │  Determine   │
      260           │ record value │
                    └──────────────┘
                            │
                    ┌──────────────┐
      270           │ Select record│
                    └──────────────┘
                            │
                    ┌──────────────┐
                    │ Output record│
      280           │    value     │
                    └──────────────┘
                            │
                    ┌──────────────┐
                    │     End      │
                    └──────────────┘
```

Fig. 2

300

310

320

330

Start

Field value in record? ──No── Field value in subject record? ──No── Data not searched

Yes

340

Field value in subject record? ──No── Candidate not searched

350

Yes

Candidate data not present

335

Yes

360 | Tokenise

370 | Determine score

380

Permutation <Limit? ──Yes── Re-order tokens; Permutation++

385

Yes

Output final score

390

Fig. 3

400

Start

405 | Exact match? | —Yes— | Score = 100 | 410

415 | Convert chars

420 | Remove unsupported chars

425 | Exact match? | —Yes— | Score = 100 | 430

435 | Determine running score

440 | Adjust running score

445 | Determine final score

Fig. 4

**EP 2 866 156 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090319515 A